# EUROPEAN PATENT SPECIFICATION

(11) **EP 2 439 345 B1**
(45) Date of publication and mention of the grant of the patent: **03.01.2018**
(21) Application number: 11180772.3
(22) Date of filing: 09.09.2011
(51) Int. Cl.: E03C 1/02, F16K 11/065, F16K 27/04

(54) **A switching device for sanitary fittings, in particular showers, bathtubs and the like**
Schaltvorrichtung für Sanitäreinbauten, insbesondere Duschen, Badewannen und dergleichen
Dispositif de commutation pour appareils sanitaires, en particulier des douches, des baignoires et similaires

(30) Priority: 08.10.2010 IT MI20101841
(43) Date of publication of application: 11.04.2012
(73) Proprietor: Bollo, Patrizia, 28010 Cavaglio d'Agogna (Novara) (IT)
(72) Inventor: Bollo, Patrizia, 28010 Cavaglio d'Agogna (Novara) (IT)
(74) Representative: Rastelli, Franco

(56) References cited:
- WO-A1-2007/021064
- WO-A1-2011/071874
- DE-U1- 29 513 138
- US-A1- 2004 050 432
- US-A1- 2009 126 811

## Description

### BACKGROUND OF THE INVENTION

The present invention relates to a combination of a switching device for sanitary fittings such as showers and bathtubs and a mixing cartridge.

As known, in showers and bathtubs switching devices designed for properly directing water flows to desired places, such as the shower blower assembly located at the top of the shower box, the side shower assembly including related flexible connecting hoses, multiple side jet assemblies and so on, are conventionally used.

Prior switching devices comprise rotary control assemblies, with two or more outlets and a pawl or the like device for signaling that a target position is reached.

Thus, it should be apparent that the above prior switching devices are custom designed and made for each desired application which involves a great expense for the required molds, tools and the like.

From a functional standpoint, moreover, prior switching devices have been found very difficult to be driven, due to an intrinsic operation resistance, which is usually aggravated by the fact that said devices are usually operated by users having wet or soaped hands.

WO 2011/071874 discloses a diverter valve assembly for a liquid dispenser that allows fluid communication between a single fluid pathway and any one of multiple fluid pathways. The valve assembly includes a housing and a selection member allowing a single fluid source to enter a single small one handle joystick type control valve, such that a user may select from multiple outlets, with the flow volume being off, full on, or variable between off and full on, and in which flow is delivered only to one outlet and not mixed between the outlets. US-A-2009/126811 discloses a combination according to the preamble of claim 1. This known combination does not allow to convey mixed water either to one or to the other of two or more separated directrix lines corresponding to two or more separated using places.

### SUMMARY OF THE INVENTION

Thus, the aim of the present invention is to provide a combination of a switching device for sanitary fittings such as showers and bathtubs and a mixing cartridge, adapted to overcome the above mentioned drawbacks of prior combinations intended for the same applications.

Within the scope of the above aim, a main object of the invention is to provide such a combination which is very simple construction-wise and reliable in operation.

Another object of the present invention is to provide such an easily operated combination and the use of which would be self-evident to the user.

Yet another object of the present invention is to provide such a combination which may be made starting from already existing elements and materials forming conventional mixing cartridges and which is accordingly very competitive from a mere economic standpoint.

Yet another object of the present invention is to provide such a combination which, owing to its specifically designed construction, is very reliable and safe in operation.

According to one aspect of the present invention, the above aims and objects, as well as yet other objects, which will become more apparent hereinafter, are achieved by a combination according to claim 1. Said driving rod element defines at least two water delivery positions, thereat a mixed water flow is directed either to one or to the other of two separated directions corresponding to two or more separated using regions.

Said driving rod is movable in said support assembly according to a restrained path defined by two directrix lines arranged according to a V pattern having a set "opening" of the V pattern legs.

Said driving or control rod element comprises moreover a central closure position located at the vertex of the V-shape.

Thus, by driving or displacing the rod element in either one or the other directrix line directions, a continuous opening movement is achieved, from a closure position, corresponding to the central position, to a full opening position, corresponding to the vertex point of one of the two V-shape legs, thereby allowing to control or adjust the outlet water flow amount only in a single direction.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is an exploded perspective view of a joystick type of cartridge made starting from a conventional mixing cartridge assembly:
   Figure 2 is a further exploded perspective view of the combination according to the present invention;
   Figure 3 is yet another perspective view of the inventive combination, being shown in assembled conditions thereof;
   Figure 4 is yet another perspective view showing the device of the preceding figures as applied to a mixing cartridge;
   Figure 5 is a perspective view of a control or drive device of a mixing cartridge having an idle or like movement, of a per se known type, which is replaced by the device according to figure 3;
   Figure 6 is yet another exploded perspective view of a modified embodiment of the present invention, as applied to the cartridge shown in figure 4; and
   Figure 7 is yet another perspective view of the device shown in figure 6, but illustrated in assembled conditions thereof.

### DESCRIPTION OF THE PREFERRED EMBODIMENTS

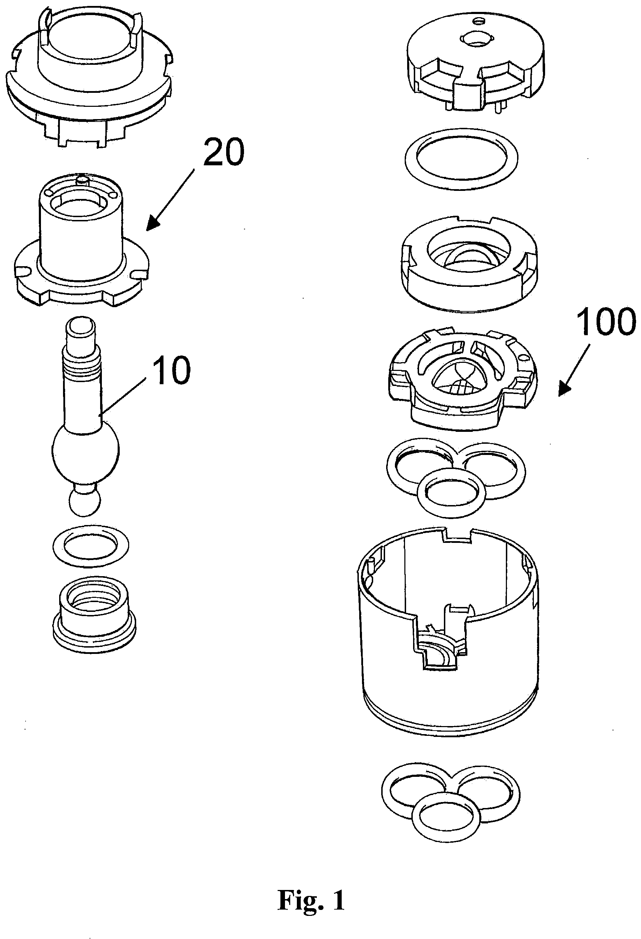

With reference to the number references of the above mentioned figures, the switching device according to the present invention, which has been generally indicated by the reference number 1, comprises a V-shape control or drive unit applied to a body of a mixing cartridge 100, as shown in figure 1.

The V-shape control or drive unit, which may depend on the movement performed by its control rod, is made by replacing the rod element 10 and the detail or component 20, the latter being usually made of a plastic material, including therein the rod element of a conventional mixing cartridge of the type driven by a joystick movement as shown in figure 1.

More specifically, said cartridge 100 may be custom made depending on the intended application or it may be derived from a conventional cartridge, either including or not an idle movement.

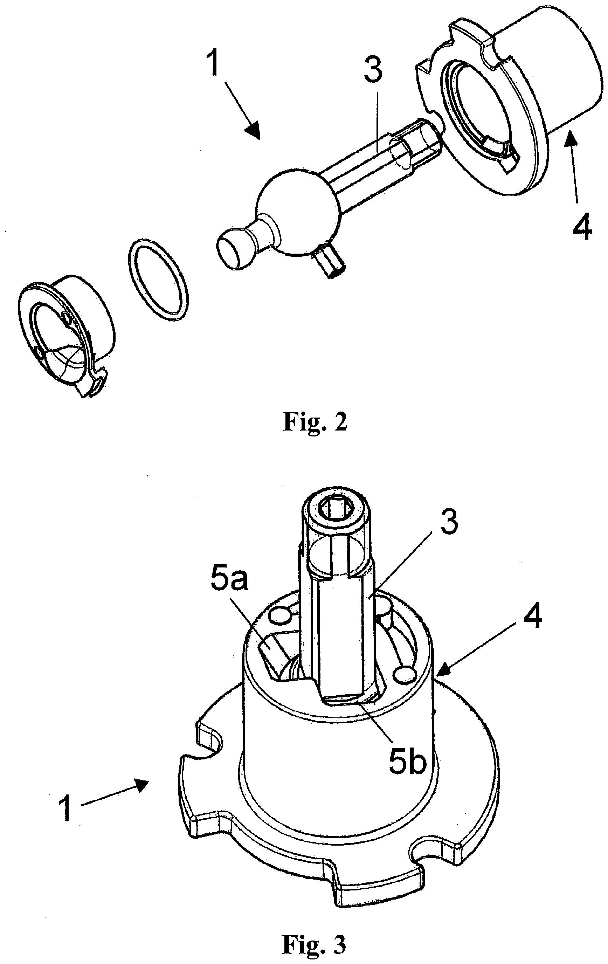

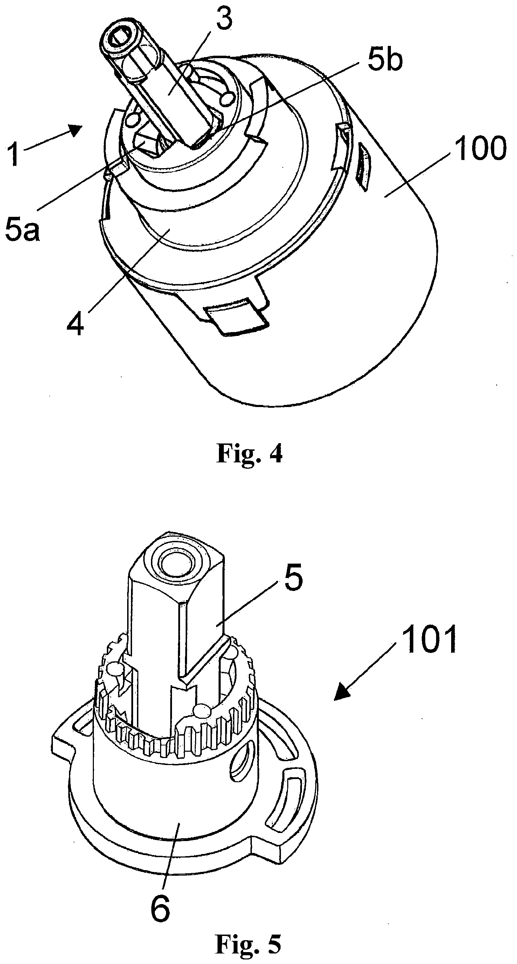

The device 1, according to the present invention, comprises a rod element 3 movable in a support assembly 4, through a restrained path defined by two V arranged directrix lines 5a and 5b, as clearly shown in figures 3 and 4.

At a closing or closure position of the device, the rod 3 is arranged centrally at the V-shape vertex, thereby the switching device may be used in all applications requiring a closure movement, for example in association with a thermostatic type of cartridge.

Thus, by displacing or driving the rod element 3 in a direction of one of said two directrix lines 5a and 5b, a continuous opening movement is achieved, from a closure position to a full opened position, thereby allowing the outlet water flow to be controlled exclusively according to a direction, differently from a conventional or prior switching device, in which such an operation is not provided or possible.

By suitably locating the switching device according to the present invention, it may be used in a per se self-evident manner, for example with the top blowing assembly with an upward type of lever movement and side jet assemblies with a lateral type of movement.

Another advantage of the switching device according to the present invention is that it may be easily used by handicapped persons not able of easily driving prior devices having a rotary type of controlling movement.

In this connection, the fact to be pointed out is that the switching device according to the present invention, provided with a central closure position and unidirectional operating paths, may be made by using inner device components of suitable configurations and shapes, thereby providing not only two, but three or more, outlets, according to the same inventive driving idea.

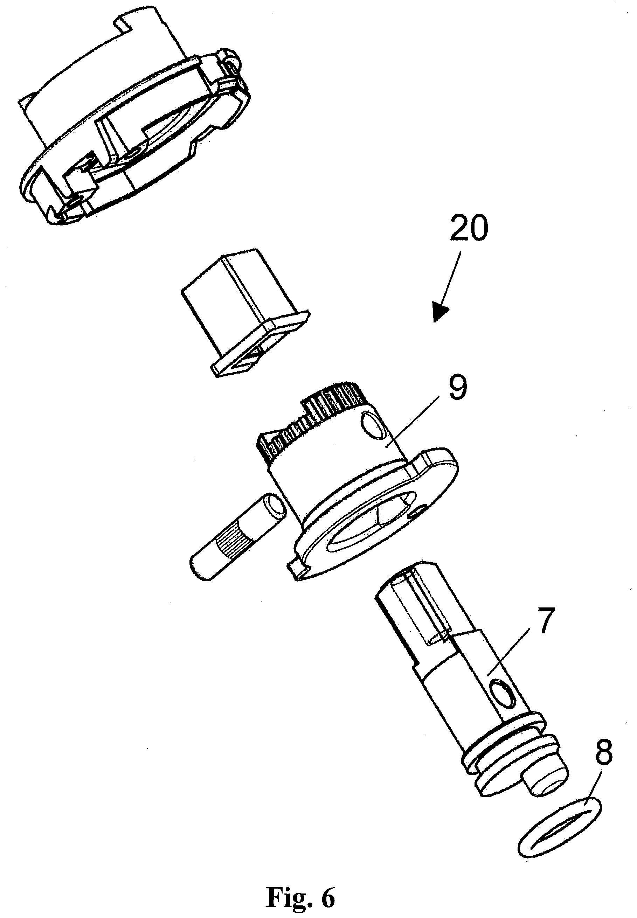

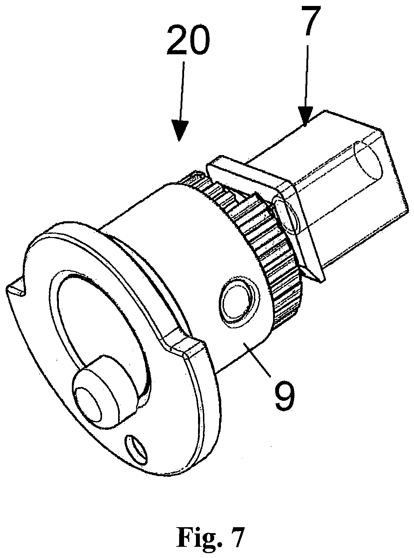

Figures 6 and 7 show a modified switching device, indicated generally by the reference number 20, according to a further aspect of the present invention.

In particular, such a modified switching device 20 may also be derived from the control or drive unit of a conventional mixing cartridge 101 preferably driven by an idle or the like movement, by simply replacing the starting control or drive rod element 5, and, if necessary, the related support assembly 6 as clearly shown in figure 5.

The device 20 according to this modified embodiment of the invention comprises a rod element 7, of a suitable shape, and designed for holding ceramics disc elements always in an opening position thereof.

More specifically, said rod element 7, being supported by a support assembly 9, may comprise a cushioning rubber element 8, such as a rubber-ring or the like, for compensating possible clearances of the operating mechanism.

The achieved movement, which is exclusively a rotary one, is characterized by a very good operating softness, thereby preventing any drawbacks in operating the device with wet or soaped hands.

The inventive switching device does not comprise a closure position, and has a very advantageous feature not provided by similar devices, that is the possibility of conveying water not only to a target outlet, corresponding to hand right or left rotary end positions, but simultaneously also in two directions, for example to the shower blowing assembly and the side jet assemblies without requiring to perform complex connections or use specifically designed holding bodies.

Such a bidirectional simultaneous use does not provide preset water flow rates, as in devices with connections outside of the cartridge, but may be easily changed at will depending on requirements.

The possibility of providing simultaneous delivery outlets is assured by very good water delivering performance, notwithstanding a small size of the switching device, having a diameter of about 35 mm.

It has been found that the invention fully achieves the intended aim and objects.

In practicing the invention, the used materials, as well as the contingent size and shapes, can be any, according on requirements.

## Claims

1. A combination of a switching device for sanitary fittings such as showers and bathtubs and a mixing cartridge, wherein the switching device (1) is applied to the body of the mixing cartridge, said switching device comprising a control rod element (3) movable in a support assembly (4) associated with said mixing cartridge (100), said control rod element (3) having at least two water delivery positions, **characterized in that** said at least two water delivery positions a mixed water flow being conveyed either to one or to the other of two or more separated directrix lines (5a, 5b) corresponding to two or more separated using places, said control rod element (3) being movable in said support assembly (4) according to a restrained driving path defined by said two directrix lines (5a, 5b) arranged with a V-shape having two V-shape legs, said control rod element (3) having a central closure position at a vertex point of said V-shape, and as said control rod is displaced in a direction of one of said two directrix lines, said device is continuously opened, from a closure position, corresponding to said central closure position, to a fully opened position, corresponding to said vertex point of one of two legs of said V-shape, thereby allowing to control the outlet water flow rate in a single direction only.

2. The combination according to claim 1, **characterized in that** said switching device comprises three or more directrix lines to controllably convey a water flow to three or more separated using places.

3. The combination according to claim 1, **characterized in that** said switching device has a diameter of about 35 mm.

## Patentansprüche

1. Kombination aus einer Schaltvorrichtung für Sanitäreinbauten, wie Duschen und Badewannen, und einer Mischkartusche, wobei die Schaltvorrichtung (1) am Körper der Mischkartusche angebracht ist, wobei die Schaltvorrichtung ein Steuerstangenelement (3) umfasst, das in einer Haltevorrichtung (4), die mit der Mischkartusche (100) verbunden ist, bewegbar ist, wobei das Steuerstangenelement (3) mindestens zwei Wasserzuführungspositionen aufweist, **dadurch gekennzeichnet, dass** die mindestens zwei Wasserzuführungspositionen eine gemischte Wasserströmung entweder zu einer oder der anderen von zwei oder mehr getrennten Leitlinien (5a, 5b), die zwei oder mehr getrennten Nutzungsorten zugehörig sind, leiten, wobei das Steuerstangenelement (3) in der Haltevorrichtung (4) gemäß einem eingeschränkten Antriebspfad, der durch die beiden Leitlinien (5a, 5b) definiert ist, die V-förmig mit zwei V-förmigen Abschnitten angeordnet sind, bewegbar ist, wobei das Steuerstangenelement (3) eine mittlere Schließposition an einem Scheitelpunkt der V-Form aufweist, und wenn die Steuerstange in eine Richtung von einer der beiden Leitlinien verschoben wird, die Vorrichtung stufenlos aus einer Schließposition, die der zentralen Schließposition entspricht, auf eine vollständig geöffnete Position, die dem Scheitelpunkt von einem von zwei Abschnitten der V-Form entspricht, geöffnet wird, wobei ermöglicht wird, den Durchfluss austretenden Wassers in nur eine Richtung zu steuern.

2. Kombination nach Anspruch 1, **dadurch gekennzeichnet, dass** die Schaltvorrichtung drei oder mehr Leitlinien umfasst, um einen Wasserfluss kontrolliert zu drei oder mehr getrennten Nutzungsorten zu leiten.

3. Kombination nach Anspruch 1, **dadurch gekennzeichnet, dass** die Schaltvorrichtung einen Durchmesser von etwa 35 mm aufweist.

## Revendications

1. Combinaison d'un dispositif de commutation pour appareils sanitaires, tels que des douches et des baignoires et une cartouche de mélange, dans lequel le dispositif de commutation (1) est appliqué sur le corps de la cartouche de mélange, ledit dispositif de commutation comprenant un élément de tige de commande (3) mobile dans un ensemble de support (4) associé à ladite cartouche de mélange (100), ledit élément de tige de commande (3) ayant au moins deux positions de fourniture d'eau, **caractérisé en ce que** lesdites au moins deux positions de fourniture d'eau ont un écoulement d'eau mélangé qui est transporté soit vers l'un soit vers l'autre de deux ou plusieurs lignes directrices (5a, 5b) séparées correspondant à deux ou plusieurs emplacements d'utilisation séparés, ledit élément de tige de commande (3) étant mobile dans ledit ensemble de support (4) selon un trajet d'entraînement restreint défini par lesdites deux lignes directrices séparées (5a, 5b) agencées avec une forme en V ayant deux branches en V, ledit élément de tige de commande (3) ayant une position de fermeture centrale à un point de sommet de ladite forme en V, et lorsque ladite tige de commande est déplacée dans une direction de l'une desdites deux lignes directrices, ledit dispositif est ouvert de façon continue, à partir d'une position de fermeture, correspondant à ladite position de fermeture centrale, vers une position totalement ouverte, correspondant audit point de sommet de l'une des deux branches de ladite forme en V, permettant ainsi de commander le débit d'eau sortant dans une seule direction uniquement.

2. Combinaison selon la revendication 1, **caractérisé en ce que** ledit dispositif de commutation comprend trois ou plusieurs lignes directrices pour transporter de façon commandée un écoulement d'eau vers trois ou plusieurs emplacements d'utilisation séparés.

3. Combinaison selon la revendication 1, **caractérisé en ce que** ledit dispositif de commutation a un diamètre d'environ 35 mm.
